# EUROPÄISCHE PATENTSCHRIFT

(11) **EP 2 342 050 B1**
(45) Veröffentlichungstag und Bekanntmachung des Hinweises auf die Patenterteilung: **09.05.2018**
(21) Anmeldenummer: 09781742.3
(22) Anmeldetag: 12.08.2009
(51) Int. Cl.: F16H 59/04, F16H 3/62, B25B 21/00, B25F 5/00

(54) **HANDWERKZEUGMASCHINE MIT EINEM SCHALTBAREN GETRIEBE**
HAND-HELD POWER TOOL COMPRISING A SHIFTABLE GEARBOX
MACHINE-OUTIL MANUELLE ÉQUIPÉE D'UNE TRANSMISSION DÉBRAYABLE

(30) Priorität: 25.09.2008 DE 102008042354
(43) Veröffentlichungstag der Anmeldung: 13.07.2011
(73) Patentinhaber: Robert Bosch GmbH, 70442 Stuttgart (DE)
(72) Erfinder: ROEHM, Heiko, 70176 Stuttgart (DE)
(86) Internationale Anmeldenummer: PCT/EP2009/060426
(87) Internationale Veröffentlichungsnummer: WO 2010/034563

(56) Entgegenhaltungen:
- DE-A1-102004 058 809
- JP-A- 2001 088 051
- US-A- 5 550 416

## Beschreibung

Die Erfindung bezieht sich auf eine Handwerkzeugmaschine mit einem schaltbaren Getriebe nach dem Oberbegriff des Anspruches 1.

### Stand der Technik

In der DE 10 2004 058 809 A1 wird eine als Akku-Schrauber ausgebildete Handwerkzeugmaschine beschrieben, die mit einem elektrischen Antriebsmotor ausgestattet ist, welcher über ein mehrstufiges Planetengetriebe eine im Gehäuse drehbar gelagerte Werkzeugaufnahme zur Aufnahme eines Werkzeugs antreibt.

Üblicherweise können derartige Planetengetriebe zwischen zwei Gangstufen mit langsamer Umdrehungsgeschwindigkeit und hohem Drehmoment bzw. höherer Umdrehungsgeschwindigkeit und geringerem Drehmoment geschaltet werden. Hierbei verstellt ein Schaltschieber manuell in Achsrichtung ein Schalthohlrad zwischen einer Rastposition mit einer gehäusefesten Rastscheibe und einer Außerrastposition, wobei das Schalthohlrad mit einem Planetenträger des Planetengetriebes drehverbunden ist, so dass in der Rastposition auch das Getriebehohlrad fest mit dem Gehäuse gekoppelt ist und in der Außerrastposition das Getriebehohlrad umlaufen kann. Beim Verstellen zwischen der Rast- und Außerrastposition wird das Getriebehohlrad plötzlich beschleunigt bzw. abgebremst. Unter Last lässt sich der Schaltvorgang nicht zuverlässig durchführen; in diesem Fall muss der Bediener die Handwerkzeugmaschine ausschalten und wieder einschalten, wobei erst bei dem erneuten Anlauf der Schaltvorgang abgeschlossen wird.

Aus US 5,550,416 ist eine Handwerkzeugmaschine mit einer Gangwechselvorrichtung und einer Gangwahlvorrichtung bekannt. Die Gangwechselvorrichtung umfasst einen Schaltring, der bezüglich eines Getriebegehäuses in eine Rastposition und eine Außerrastposition bringbar ist. Die Gangwahlvorrichtung umfasst einen Stellring, welcher in Grenzen drehbar gelagert ist.

### Offenbarung der Erfindung

Der Erfindung liegt die Aufgabe zugrunde, eine Handwerkzeugmaschine mit einem mehrstufigen, zwischen mindestens zwei Gangstufen schaltbaren Getriebe mit einfachen konstruktiven Maßnahmen so auszugestalten, dass unter verschiedenen Betriebsbedingungen, insbesondere auch unter Last, ein Wechsel zwischen den Gangstufen bei reduzierter Bauteilbelastung zuverlässig durchführbar ist.

Diese Aufgabe wird erfindungsgemäß mit den Merkmalen des Anspruches 1 gelöst Die Unteransprüche geben zweckmäßige Weiterbildungen an.

Die erfindungsgemäße Handwerkzeugmaschine ist mit einem schaltbaren, mehrstufigen Getriebe ausgestattet, das mindestens zwei Gangstufen aufweist, die über ein verstellbares Schaltglied zu aktivieren bzw. einzulegen sind. In einer ersten Gangstufe steht das Schaltglied mit einem Rastglied in einer Rastposition, in einer zweiten Gangstufe steht dagegen das Schaltglied in Außerrastposition mit dem Rastglied. Der Rastposition und der Außerrastposition des Schaltglieds sind die verschiedenen Gangstufen des Getriebes zugeordnet. Das Schaltglied beaufschlagt ein Getriebebauteil, das mit dem Verstellen des Schaltgliedes zwischen Rast- und Außerrastposition die verschiedenen Gangstufen einnimmt.

Bei der erfindungsgemäßen Ausführung ist das Rastglied innerhalb eines begrenzten Winkelabschnitts zwischen zwei Endanschlagspositionen drehbar um die Rotationsachse des Werkzeugs im Gehäuse gelagert. Im Unterschied zu Ausführungen aus dem Stand der Technik wird die drehfeste Verbindung des Rastgliedes zum Gehäuse zumindest soweit aufgehoben, dass eine Verdrehung des Rastgliedes zwischen den beiden Endanschlagspositionen ermöglicht ist, so dass das Rastglied zwischen diesen beiden Endanschlagspositionen seine Winkellage verändern kann. In bevorzugter Ausführung ist jede dieser Endanschlagspositionen einer Rastposition bzw. einer Außerrastposition zugeordnet und damit auch jeweils einer Gangstufe. Zum Wechsel der Gangstufe führt das Rastglied eine begrenzte Winkeldrehung aus, so dass beispielsweise beim Überführen von der Außerrast- in die Rastposition das Rastglied bis zum Erreichen der gegenüberliegenden Endanschlagsposition eine Drehbeschleunigung und damit eine kontinuierliche Änderung der Drehwinkelgeschwindigkeit erfährt und im Unterschied zum Stand der Technik keine schlagartige Kopplung mit einhergehendem Ruck des Getriebebauteils zwischen Stillstand und Umlaufen stattfindet. Dieser Vorteil kommt sowohl beim Überführen des Rastgliedes von der Rastposition in die Außerrastposition als auch in Gegenrichtung zum Tragen, also sowohl beim Wechsel von der ersten in die zweite Gangstufe als auch umgekehrt. Des Weiteren wird insbesondere auch unter Last der Handwerkzeugmaschine ein Gangwechsel ermöglicht, ohne dass dies zu einer unzulässig hohen Bauteilbelastung führt.

Die Endanschlagspositionen werden vorteilhafterweise über Anschläge am Rastglied und am Gehäuse der Handwerkzeugmaschine realisiert. Zweckmäßigerweise ist am Rastglied genau ein Anschlag vorgesehen, der in die Anschlagsposition mit dem Gehäuseanschlag zu bringen ist. Hierbei kann es vorteilhaft sein, dass der Rastgliedanschlag in den beiden Endanschlagspositionen an gegenüberliegenden Seiten des Gehäuseanschlags auf Kontakt liegt, so dass zum Überführen zwischen den beiden Endanschlagspositionen das Rastglied eine Winkelumdrehung von 360° abzüglich des vom Gehäuseanschlag eingenommenen Winkelsegments ausführen kann. Bei einer entsprechend schmalen Ausführung des gehäuseseitigen Anschlags kann daher das Rastglied seine Winkelposition um annähernd 360° ändern; über diese Winkeldifferenz wird das Rastglied maximal bei der Überführung von der ersten in die zweite Gangstufe bzw. in Gegenrichtung verstellt.

Gemäß weiterer bevorzugter Ausführung ist vorgesehen, dass das Rastglied von mindestens einem Federelement in eine Ausgangswinkellage kraftbeaufschlagt ist. Diese Ausgangswinkellage befindet sich vorteilhafterweise zwischen den Endanschlagspositionen, insbesondere mittig zwischen den Endanschlagspositionen, so dass das Rastglied im unbelasteten Zustand in beide Richtungen die gleiche Winkeldifferenz bis zum Erreichen des gehäuseseitigen Anschlags überbrücken muss. In den Anschlagspositionen ist das Rastglied jeweils einer Rückstellkraft in Richtung der Ausgangswinkellage unterworfen.

Zur Verstellung zwischen Rastposition und Außerrastposition führt das Schaltglied, welches in die Rastposition mit dem Rastglied zu verbringen ist, zweckmäßigerweise eine axiale Stellbewegung aus. Dies wird beispielsweise bei einer ringförmigen Ausgestaltung des Rastgliedes als Rastring dadurch erreicht, dass Rastelemente an dem Rastring mit korrespondierenden Rastelementen am Schaltglied durch die axiale Stellbewegung in die Rastposition gelangen. Die Rastelemente an dem Rastring befinden sich vorzugsweise im Bereich einer Stirnfläche des Rastringes.

Gemäß weiterer bevorzugter Ausführung handelt es sich bei dem Getriebe um ein Planetengetriebe, das zumindest einstufig, gegebenenfalls auch zwei- oder dreistufig ausgeführt ist und mindestens eine erste Gangstufe und eine zweite Gangstufe mit unterschiedlichen Übersetzungs- und Drehmomentverhältnissen aufweist, wobei mithilfe des Schaltgliedes zwischen der ersten und der zweiten Gangstufe zu schalten ist. Das Planetengetriebe weist mindestens einen Planetenträger und mindestens ein Getriebehohlrad auf, welches die Planetenräder einschließt. In der ersten Gangstufe ist das Getriebehohlrad über das Schaltglied mit dem Rastglied gekoppelt, in der zweiten Gangstufe ist das Getriebehohlrad vom Rastglied entkoppelt. Das Schaltglied ist hierbei bevorzugt als Schalthohlrad ausgebildet, dass das Getriebehohlrad zweckmäßigerweise umschließt und mit dem Getriebehohlrad in Drehrichtung gekoppelt ist. In der Rastposition ist das Getriebehohlrad über das Schalthohlrad mit dem Rastring gekoppelt, der mit Erreichen der Endanschlagsposition eine gehäusefeste Lage einnimmt, so dass auch das Getriebehohlrad eine gehäusefeste Lage hat und sich nicht drehen kann. In der Außerrastposition ist dagegen die Rastverbindung zu dem Rastring aufgehoben, so dass das Getriebehohlrad mit der gleichen Drehzahl wie der Planetenträger umlaufen kann.

Gemäß einer weiteren zweckmäßigen Ausführung ist vorgesehen, dass das Schalthohlrad und das Getriebehohlrad ein gemeinsames, einteiliges Bauteil bilden. Diese Ausführung zeichnet sich durch eine besonders kompakte Bauform aus.

Des Weiteren ist es möglich, den Rastring mit einem weiteren Getriebehohlrad (3. Stufe) zu einem einteiligen Bauteil zusammenzufassen, wobei in diesem Fall das Getriebehohlrad dritter Stufe rotatorisch gegen eine Federkraft beweglichen Gehäuse gelagert ist.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt in Längsrichtung durch eine Handwerkzeugmaschine im Bereich eines schaltbaren Getriebes, das als Planetengetriebe ausgeführt ist, wobei zum Schalten zwischen zwei Gangstufen ein Schalthohlrad, das mit einem Getriebehohlrad des Planetengetriebes drehgekoppelt ist, zwischen einer Rastposition mit einem Rastring und einer Außerrastposition axial zu verstellen ist,
- Fig. 2: einen Schnitt quer zur Längs- bzw. Wellenachse der Handwerkzeugmaschine im Bereich des Rastringes.

In den Figuren sind gleiche Bauteile mit gleichen Bezugszeichen versehen.

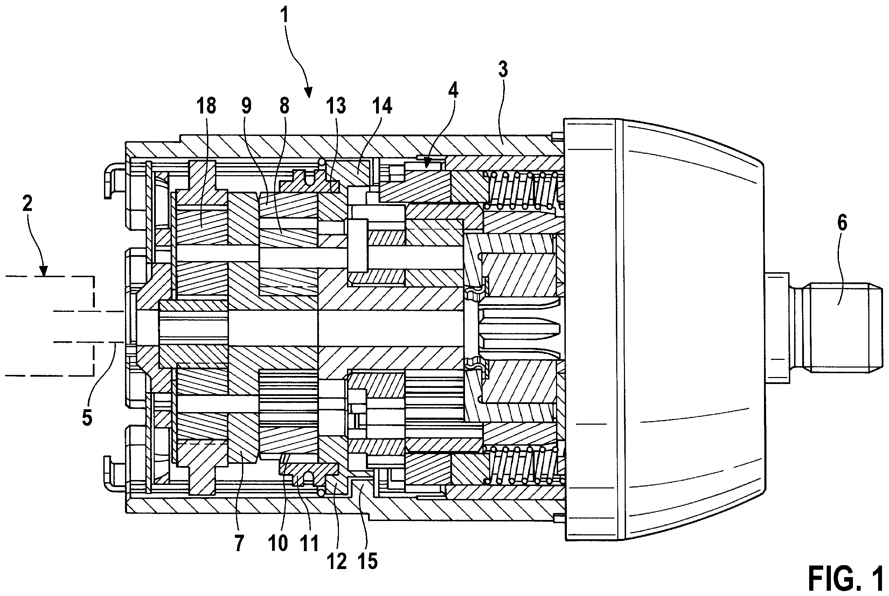

Bei der in Fig. 1 dargestellten Handwerkzeugmaschine 1 handelt es sich beispielsweise um einen Akku-Schrauber bzw. Akku-Bohrer. Die Handwerkzeugmaschine 1 umfasst in einem Gehäuse 3 einen nur andeutungsweise dargestellten elektrischen Antriebsmotor 2, dessen Motorwelle 5 ein Planetengetriebe 4 im Gehäuse 3 antreibt, das mit einem Werkzeugaufnahmeteil 6 drehgekoppelt ist. Das Planetengetriebe 4 ist dreistufig ausgeführt und weist zwei Gangstufen auf, zwischen denen zur Änderung des Untersetzungs- und Drehmomentverhältnisses hin- und hergeschaltet werden kann.

Das Planetengetriebe 4 umfasst einen Planetenträger (1. Stufe) 7, der Träger von Planetenrädern 18 ist. Des Weiteren ist dem Planetengetriebe 4 ein Getriebehohlrad (2. Stufe) 9 zugeordnet, das die Planetenräder 8 umschließt und über eine Mitnahmeverzahnung 10 mit einem Schalthohlrad 11 drehgekoppelt ist, welches als Schaltglied gegenüber dem Gehäuse 3 eine axiale Stellbewegung ausführen kann. Das Schalthohlrad 11 ist zwischen einer Rastposition und einer Außerrastposition axial zu verschieben, wobei in der Rastposition über eine Verriegelungsgeometrie 13 eine drehfeste Kopplung zu einem gehäuseseitig gelagerten Rastring 12 besteht. Im dargestellten Beispiel sind die Verriegelungsgeometrie 13 und die Mitnahmeverzahnung 10 identisch ausgeführt. In der Rastposition ist somit aufgrund der Mitnahmeverzahnung 10 auch das Getriebehohlrad 9 fest mit dem Rastring 12 verbunden. In der Außerrastposition ist dagegen das Schalthohlrad 11 axial von dem Rastring 12 entfernt, so dass die Verrastung aufgehoben ist. In der Außerrastposition ist das Getriebehohlrad einschließlich des Schalthohlrades rotatorisch mit dem Planetenträger 7 drehgekoppelt und verdreht sich mit der gleichen Drehzahl relativ zum Gehäuse wie der Planetenträger.

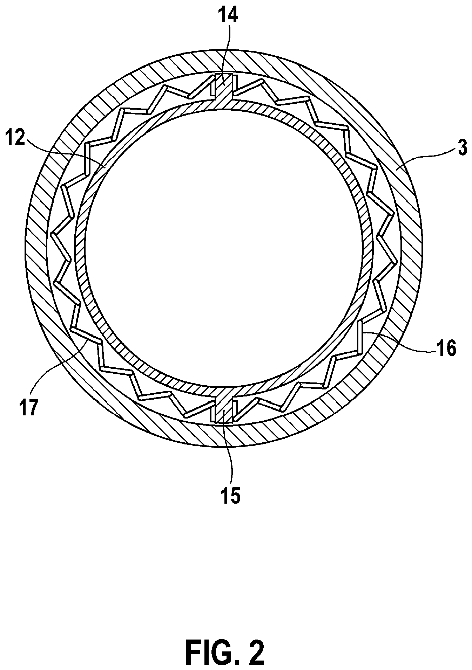

Der Rastring 12 ist, wie Fig. 1 in Verbindung mit Fig. 2 zu entnehmen, gegenüber dem Gehäuse 3 drehbar gelagert, jedoch nur innerhalb eines begrenzten Winkelabschnittes zwischen zwei Endanschlagspositionen, die von einem Rastgliedanschlag 14 am Rastring 12 und einem Gehäuseanschlag 15 am Gehäuse 3 festgelegt werden. Der Rastring 12 ist gegenüber dem Gehäuse 3 über zwei Federelemente 16 und 17 in einer Ausgangswinkellage gehalten, in der der Rastgliedanschlag 14 dem Gehäuseanschlag 15 diametral gegenüberliegt, so dass der Rastring 12 in beide Drehrichtungen jeweils eine Winkeländerung von annähernd 180° ausführen kann. Die gesamte Winkeländerung, die der Rastring 12 ausüben kann, beträgt somit annähernd 360°. In den Endanschlagpositionen liegt der Rastgliedanschlag 14 an gegenüberliegenden Seiten des Gehäuseanschlags 15 auf Kontakt an.

Die Änderung der Drehwinkellage des Rastrings 12 erlaubt es diesem, beim Wechsel der Gangstufe, wenn das Schalthohlrad 11 in Rastposition mit dem Rastring 12 gebracht werden soll, ausgehend von der mittleren Ausgangswinkellage, die in Fig. 2 dargestellt ist, die Drehbewegung von annähernd 180° bis zum Erreichen der Endanschlagsposition auszuführen. Dadurch erfolgt der Kupplungsvorgang nicht schlagartig, vielmehr wird gegen die Kraft eines der Federelemente 16 bzw. 17 der Rastring einschließlich in die Rastposition zu bringenden Schalthohlrades beschleunigt, so dass ein hierbei entstehender Drehmomentenstoß sowohl für die Bedienperson als auch für die Mechanik in der Handwerkzeugmaschine aufgrund des Federweges reduziert ist. Damit ist auch der Verschleiß an der Verriegelungsgeometrie verringert. Des Weiteren kann auf eine Gangvorwahlfeder für das Schalthohlrad verzichtet werden, die ansonsten im Stand der Technik zur axialen Kraftbeaufschlagung des Schalthohlrades gegen den Rastring erforderlich ist.

Die Federelemente 16 und 17 sind vorteilhafterweise als Metallfedern ausgeführt. Es kommt aber auch eine Ausführung als viskoelastisches Gummibauteil oder Kunststoffbauteil in Betracht.

## Patentansprüche

1. Handwerkzeugmaschine mit einem schaltbaren Getriebe (4), das mindestens zwei Gangstufen aufweist, die über ein verstellbares Schaltglied (11) einzulegen sind, wobei in einer ersten Gangstufe das Schaltglied (11) mit einem Rastglied (12), das mit dem Gehäuse (3) der Handwerkzeugmaschine (1) verbunden ist, in einer Rastposition und in einer zweiten Gangstufe in einer Außerrastposition mit dem Rastglied (12) steht, **dadurch gekennzeichnet, dass** das Rastglied (12) innerhalb eines begrenzten Winkelabschnitts zwischen zwei Endanschlagspositionen drehbar im Gehäuse (3) gelagert ist.

2. Handwerkzeugmaschine nach Anspruch 1, **dadurch gekennzeichnet, dass** am Rastglied (12) ein Rastgliedanschlag (14) angeordnet ist, der in den Endanschlagspositionen an unterschiedlichen Seiten eines Gehäuseanschlags (15) anliegt.

3. Handwerkzeugmaschine nach einem der Ansprüche 1 oder 2, **dadurch gekennzeichnet, dass** die zwei Endanschlagspositionen von einem Rastgliedanschlag (14) am Rastring (12) und einem Gehäuseanschlag (15) am Gehäuse (3) festgelegt werden.

4. Handwerkzeugmaschine nach einem der vorhergehenden Ansprüche, **dadurch gekennzeichnet, dass** das Rastglied (12) gegenüber dem Gehäuse (3) über zwei Federelemente (16, 17) in einer Ausgangswinkellage gehalten ist, in der ein Rastgliedanschlag (14) einem Gehäuseanschlag (15) diametral gegenüberliegt.

5. Handwerkzeugmaschine nach einem der vorhergehenden Ansprüche, **dadurch gekennzeichnet, dass** das Rastglied (12) von mindestens einem Federelement (16, 17) in eine Ausgangswinkellage kraftbeaufschlagt ist.

6. Handwerkzeugmaschine nach Anspruch 5, **dadurch gekennzeichnet, dass** die Ausgangswinkellage zwischen den Endanschlagspositionen liegt.

7. Handwerkzeugmaschine nach Anspruch 5 und 6, **dadurch gekennzeichnet, dass** das Rastglied (12) von zwei Federelementen (16, 17) in die zwischen den Endanschlagspositionen liegende Ausgangswinkellage kraftbeaufschlagt ist.

8. Handwerkzeugmaschine nach einem der vorhergehenden Ansprüche, **dadurch gekennzeichnet, dass** das Schaltglied (11) axial zwischen seinen Schaltpositionen zu verstellen ist.

9. Handwerkzeugmaschine nach einem der vorhergehenden Ansprüche, **dadurch gekennzeichnet, dass** das Getriebe ein Planetengetriebe (4) mit einem Planetenträger (7) und einem Getriebehohlrad (9) ist, wobei in der ersten Gangstufe das Getriebehohlrad (9) über das Schaltglied (11) mit dem Rastglied (12) gekoppelt ist und in einer zweiten Gangstufe das Getriebehohlrad (9) vom Rastglied (12) entkoppelt ist.

10. Handwerkzeugmaschine nach Anspruch 9, **dadurch gekennzeichnet, dass** das Schaltglied (11) auf der Außenseite des Getriebehohlrades (9) axial verstellbar geführt ist.

11. Handwerkzeugmaschine nach Anspruch 9 oder 10, **dadurch gekennzeichnet, dass** das Schaltglied (11) und das Getriebehohlrad (9) ein einteiliges, gemeinsames Bauteil bilden.

12. Handwerkzeugmaschine nach einem der vorhergehenden Ansprüche, **dadurch gekennzeichnet, dass** das Schaltglied als Schalthohlrad (11) ausgebildet ist.

13. Handwerkzeugmaschine nach einem der Ansprüche 9 bis 11 und 12, **dadurch gekennzeichnet, dass** das Schalthohlrad (11) das Getriebehohlrad (9) umschließt.

14. Handwerkzeugmaschine nach einem der vorhergehenden Ansprüche, **dadurch gekennzeichnet, dass** das Rastglied als Rastring (12) ausgebildet ist.

## Claims

1. Hand-held power tool comprising a shiftable gear mechanism (4), which has at least two gear stages which can be selected by means of an adjustable shifting element (11), wherein in a first gear stage the shifting element (11) is in a latching position with a latching element (12), which is connected to the housing (3) of the hand-held power tool (1), and in a second gear stage it is in an unlatched position with the latching element (12), **characterized in that** the latching element (12) is mounted rotatably in the housing (3) within a limited angular segment between two end stop positions.

2. Hand-held power tool according to Claim 1, **characterized in that** a latching element stop (14), which lies against different sides of a housing stop (15) in the end stop positions, is arranged on the latching element (12).

3. Hand-held power tool according to either of Claims 1 and 2, **characterized in that** the two end stop positions are fixed by a latching element stop (14) on the latching ring (12) and a housing stop (15) on the housing (3).

4. Hand-held power tool according to one of the preceding claims, **characterized in that** the latching element (12) is held with respect to the housing (3) in a starting angular position, in which a latching element stop (14) lies diametrically opposite a housing stop (15), by means of two spring elements (16, 17).

5. Hand-held power tool according to one of the preceding claims, **characterized in that** force is applied by at least one spring element (16, 17) to bring the latching element (12) into a starting angular position.

6. Hand-held power tool according to Claim 5, **characterized in that** the starting angular position lies between the end stop positions.

7. Hand-held power tool according to Claims 5 and 6, **characterized in that** force is applied by two spring elements (16, 17) to bring the latching element (12) into the starting angular position lying between the end stop positions.

8. Hand-held power tool according to one of the preceding claims, **characterized in that** the shifting element (11) can be adjusted axially between its shifting positions.

9. Hand-held power tool according to one of the preceding claims, **characterized in that** the gear mechanism is a planetary gear (4) with a sun wheel (7) and a ring gear wheel (9), wherein the ring gear wheel (9) is coupled with the latching element (12) by way of the shifting element (11) in the first gear stage and the ring gear wheel (9) is decoupled from the latching element (12) in a second gear stage.

10. Hand-held power tool according to Claim 9, **characterized in that** the shifting element (11) is guided axially adjustably on the outer side of the ring gear wheel (9).

11. Hand-held power tool according to Claim 9 or 10, **characterized in that** the shifting element (11) and the ring gear wheel (9) form a joint, one-piece component.

12. Hand-held power tool according to one of the preceding claims, **characterized in that** the shifting element is formed as a shifting ring wheel ' (11) .

13. Hand-held power tool according to one of Claims 9 to 11 and 12, **characterized in that** the shifting ring wheel (11) encloses the ring gear wheel (9).

14. Hand-held power tool according to one of the preceding claims, **characterized in that** the latching element is formed as a latching ring (12).

## Revendications

1. Machine-outil manuelle comprenant une transmission commutable (4), qui présente au moins deux rapports de transmission qui peuvent être enclenchés par le biais d'un organe de commutation réglable (11), dans laquelle, dans un premier rapport de transmission, l'organe de commutation (11) étant dans une position encliquetée avec un organe d'encliquetage (12) qui est connecté au boîtier (3) de la machine-outil manuelle (1), et, dans un deuxième rapport de transmission, étant dans une position non encliquetée avec l'organe d'encliquetage (12), **caractérisée en ce que** l'organe d'encliquetage (12) est supporté de manière rotative à l'intérieur d'une plage angulaire limitée entre deux positions de butée de fin de course dans le boîtier (3).

2. Machine-outil manuelle selon la revendication 1, **caractérisée en ce qu'**une butée d'organe d'encliquetage (14) est disposée au niveau de l'organe d'encliquetage (12), laquelle s'applique, dans les positions de butée de fin de course, contre des côtés différents d'une butée de boîtier (15) .

3. Machine-outil manuelle selon l'une quelconque des revendications 1 ou 2, **caractérisée en ce que** les deux positions de butée de fin de course sont fixées par une butée d'organe d'encliquetage (14) sur la bague d'encliquetage (12) et par une butée de boîtier (15) sur le boîtier (3).

4. Machine-outil manuelle selon l'une quelconque des revendications précédentes, **caractérisée en ce que** l'organe d'encliquetage (12) est retenu par rapport au boîtier (3) par le biais de deux éléments de ressort (16, 17) dans une position angulaire de sortie dans laquelle une butée d'organe d'encliquetage (14) est diamétralement opposée à une butée de boîtier (15).

5. Machine-outil manuelle selon l'une quelconque des revendications précédentes, **caractérisée en ce que** l'organe d'encliquetage (12) est sollicité par force dans une position angulaire de sortie par au moins un élément de ressort (16, 17).

6. Machine-outil manuelle selon la revendication 5, **caractérisée en ce que** la position angulaire de sortie est située entre les positions de butée de fin de course.

7. Machine-outil manuelle selon les revendications 5 et 6, **caractérisée en ce que** l'organe d'encliquetage (12) est sollicité par force par deux éléments de ressort (16, 17) dans la position angulaire de sortie située entre les positions de butée de fin de course.

8. Machine-outil manuelle selon l'une quelconque des revendications précédentes, **caractérisée en ce que** l'organe de commutation (11) peut être déplacé axialement entre ses positions de commutation.

9. Machine-outil manuelle selon l'une quelconque des revendications précédentes, **caractérisée en ce que** la transmission est une transmission planétaire (4) avec un porte-satellites (7) et une couronne dentée de transmission (9), la couronne dentée de transmission (9), dans le premier rapport de transmission, étant accouplée par le biais de l'organe de commutation (11) à l'organe d'encliquetage (12), et dans un deuxième rapport de transmission, la couronne dentée de transmission (9) étant désaccouplée de l'organe d'encliquetage (12).

10. Machine-outil manuelle selon la revendication 9, **caractérisée en ce que** l'organe de commutation (11) est guidé de manière déplaçable axialement sur le côté extérieur de la couronne dentée de transmission (9).

11. Machine-outil manuelle selon la revendication 9 ou 10, **caractérisée en ce que** l'organe de commutation (11) et la couronne dentée de transmission (9) forment un composant commun d'une seule pièce.

12. Machine-outil manuelle selon l'une quelconque des revendications précédentes, **caractérisée en ce que** l'organe de commutation est réalisé sous forme de couronne dentée de commutation (11).

13. Machine-outil manuelle selon l'une quelconque des revendications 9 à 11 et 12, **caractérisée en ce que** la couronne dentée de commutation (11) entoure la couronne dentée de transmission (9).

14. Machine-outil manuelle selon l'une quelconque des revendications précédentes, **caractérisée en ce que** l'organe d'encliquetage est réalisé sous forme de bague d'encliquetage (12).
